# EUROPÄISCHE PATENTSCHRIFT

(11) **EP 2 443 852 B1**
(45) Veröffentlichungstag und Bekanntmachung des Hinweises auf die Patenterteilung: **06.04.2016**
(21) Anmeldenummer: 10727388.0
(22) Anmeldetag: 17.06.2010
(51) Int. Cl.: H04W 12/02

(54) **VERFAHREN ZUR SCHNELLEN UND SICHEREN ÜBERTRAGUNG EINES VERSCHLÜSSELUNGSSCHLÜSSELS**
METHOD FOR QUICK AND SECURE TRANSMISSION OF ENCRYPTION KEY
PROCEDE DE TRANSMISSION RAPIDE ET SECURISEE D'UNE CLEF DE CHIFFREMENT

(30) Priorität: 18.06.2009 DE 102009029828
(43) Veröffentlichungstag der Anmeldung: 25.04.2012
(73) Patentinhaber: Gigaset Communications GmbH, 40549 Düsseldorf (DE)
(72) Erfinder: KEHREN, Dieter, 46539 Dinslaken (DE); FERNANDEZ, Gustavo, 46399 Bocholt (DE); HÜLDER, Stefan, 46286 Dorsten (DE)
(74) Vertreter: Michalski Hüttermann & Partner Patentanwälte mbB
(86) Internationale Anmeldenummer: PCT/EP2010/058568
(87) Internationale Veröffentlichungsnummer: WO 2010/146128

(56) Entgegenhaltungen:
- EP-A1- 1 843 540
- EP-A1- 1 855 177
- TING YUAN ET AL: "A Matrix-Based Random Key Pre-distribution Scheme for Wireless Sensor Networks", 16. Oktober 2007 (2007-10-16), COMPUTER AND INFORMATION TECHNOLOGY, 2007. CIT 2007. 7TH IEEE INTERNATIONAL CONFERENCE ON, IEEE, PISCATAWAY, NJ, USA, PAGE(S) 991 - 996, XP031220951, ISBN: 978-0-7695-2983-7 Seite 991, rechte Spalte, Zeile 29 - Seite 994, linke Spalte, Zeile 5; Abbildung 1
- "Digital Enhanced Cordless Telecommunications (DECT); Common Interface (CI); Part 7: Security features; ETSI EN 300 175-7", ETSI STANDARD, EUROPEAN TELECOMMUNICATIONS STANDARDS INSTITUTE (ETSI), SOPHIA ANTIPOLIS CEDEX, FRANCE, Bd. DECT, Nr. V2.2.1, 1. November 2008 (2008-11-01), XP014042271,

## Beschreibung

Die Erfindung betrifft ein Verfahren zur Verschlüsselung einer Verbindung zwischen einer Basis und einem Mobilteil, wobei ein Schlüssel generiert wird, der zwischen der Basis und dem Mobilteil während einer ersten Verbindung vereinbart wird. Zudem betrifft die Erfindung ein Computerprogrammprodukt umfassend eine Code-Einrichtung, die geeignet zum Ausführen der Schritte des erfindungsgemäßen Verfahrens ist, wenn es auf einem Computer ausgeführt wird.

In den aktuellen öffentlichen Diskussionen um die Sicherheit von Digital Enhanced Cordless Telecommunications-Produkten, im Folgenden als DECT-Produkte bezeichnet, ist ein häufig kritisierter Punkt, dass selbst bei grundsätzlich verschlüsselten Verbindungen Wahlinformationen oft noch unverschlüsselt übertragen werden, bevor die Verschlüsselung tatsächlich aktiviert ist. DECT ist ein Standard für Schnurlostelefone sowie für kabellose Datenübertragung im Allgemeinen. DECT ist definiert im ETSI-Standard EN 300 175, wobei ETSI für European Telecommunications Standards Institute steht. CAT-iq, kurz für Cordless Advanced Technology - Internet and Quality, ist als ein neuer Standard für DECT angedacht. DECT ist der Nachfolger der Standards CT1+ und des CT2, deren Betriebserlaubnis in Deutschland mit dem 31. Dezember 2008 erloschen ist. DECT unterliegt zurzeit einer Betriebserlaubnis bis mindestens 2020.

Der oft kritisierte Mangel, dass beispielsweise bei einem DECT-Verbindungsaufbau Wahlinformationen erst nach wenigen Sekunden verschlüsselt werden, liegt darin begründet, dass das Anstoßen der Verschlüsselung zunächst die Erstellung eines gemeinsamen Schlüssels, eines so genannten Derived Cipher Key, in Basis und Mobilteil bedingt. Dies geschieht im Rahmen der Netzwerk-Prozedur "Authentication of PT", wobei PT für Portable Terminal steht. Danach fordert beim üblichen "Cipher Switching Initiated by FT", wobei FT für Fixed Terminal steht, die Basis auf der Netzwerk-Ebene das Einschalten der Verschlüsselung vom Mobilteil an. Die Prozedur "Cipher Switching Initiated by FT" ist für das Generic Access Protocol, kurz als GAP bezeichnet, beim Mobilteil zwingend notwendig. Danach schaltet das Mobilteil auf Media Access Control-Ebene, kurz als MAC-Ebene bezeichnet, die Verschlüsselung tatsächlich ein. Diese Abläufe passieren parallel zu den Call Control Meldungen, im Folgenden als CC-Meldungen bezeichnet, die zum Aufbau des eigentlichen Calls dienen. Bis auf der Luftschnittstelle die Verschlüsselung tatsächlich eingeschaltet ist, sind typischerweise Wahlinformationen oft schon übertragen. Dies führt zu der genannten Sicherheitslücke bei DECT-Produkten.

Üblicherweise ist in den aktuellen Geräten dieses Problem nicht betrachtet worden, d.h. es ist zufällig und teilweise abhängig von den äußeren Umständen, wie Benutzer-Interaktionen, wann die Wahlinformation bzw. die CLIP-Information, kurz für Calling Line Identification Presentation-Information, übertragen wird, und ob zu diesem Zeitpunkt bereits die Verschlüsselung aktiviert ist oder nicht. Üblicherweise ist dies oft nicht der Fall.

Den Verbindungsaufbau zu blockieren bis die Verschlüsselung eingeschaltet ist, führt zu den Nachteilen, dass diese Verzögerung direkt zulasten der Performance an der Benutzerschnittstelle geht; die Lösung fehleranfällig wird und ein komplexes Buffern von Meldungen nötig macht, mit der gleichzeitigen Gefahr von Bufferüberläufen; die Lösung nur für CC-Meldungen realisierbar scheint bzw. für Mobility Management oder für Call Independent Supplementary Service-Statusmeldungen, kurz als CISS-Statusmeldungen bezeichnet, nur getrennt und sehr schwierig realisierbar ist; und die Lösung kaum standardisierbar erscheint.

Es ist also äußerst problematisch, eine sofortige Verschlüsselung bei einem Verbindungsaufbau zwischen einer Basis und einem Mobilteil zu generieren.

Die Veröffentlichung im Rahmen der 7 "IEEE international Conference on Computer and Information Technology im Jahr 2007 von Ting Yuan et al mit dem Titel: "A Matrix-based Random Key Pre-distribution Scheme for Wireless Sensor Networks" offenbart ein Verfahren zur Verschlüsselung der Kommunikation in einer drahtlosen Netzwerkumgebung, insbesondere in einem drahtlosen Sensor-Netzwerk. Es wird ein

Verteilung -Szenario zur Verteilung von kryptografischen Schlüsseln von einem Verschlüsselung-Server aus zu entsprechenden Sensor-Konten beschrieben, wobei auf die bisher auftretenden Probleme der Schlüsselverteilung in traditionellen Client-Server Modellen abgestellt wird. Zur Überwindung der bekannten Verteilungsproblematik wird vorgeschlagen, dass Verteilungskarten zum Einsatz gelangen, anhand welcher entsprechende Verschlüsslungen innerhalb des Netzwerkes verteilt werden. Hierbei wird allerdings nur mit einem Schlüssel gearbeitet und mit Hilfe eines intermediären Knotens und eines 'key servers'.

Es ist die Aufgabe der Erfindung, eine Möglichkeit bereitzustellen, eine Verschlüsselung einer Verbindung zwischen einer Basis und einem Mobilteil schon vor bzw. mit dem ersten zu übertragenen Datensatz anzustoßen.

Diese Aufgabe wird dadurch gelöst, dass ein Verfahren zur Verschlüsselung einer Verbindung zwischen einer Basis und einem Mobilteil bereitgestellt wird, wobei das Verfahren die folgenden Schritte umfasst: a) Generierung eines Schlüssels, der zwischen der Basis und dem Mobilteil während einer ersten Verbindung vereinbart wird, wobei der Schlüssel einen Index umfasst, der von der Basis während der ersten Verbindung zugewiesen wird, und b) Verwendung des generierten Schlüssels bei einer zweiten Verbindung zwischen der Basis und dem Mobilteil, wobei die zu übertragenden Daten zwischen der Basis und dem Mobilteil anhand des dem Schlüssel zugewiesenen Indexes identifiziert und verschlüsselt werden.

Somit wird eine sofortige Verschlüsselung einer Verbindung zwischen einer Basis und einem Mobilteil gewährt und die Sicherheit bei kabelloser Datenübertragung erhöht. Vorzugsweise werden die zu übertragenden Daten zwischen der Basis und dem Mobilteil anhand des dem Schlüssel zugewiesenen Indexes identifiziert und unmittelbar nach dem MAC-Verbindungsaufbau verschlüsselt.

Der Schlüssel umfasst vorzugsweise einen Default Cipher Key und/oder einen Derived Cipher Key. Die Generierung des Schlüssels erfolgt vorzugsweise nach einer ersten Anmeldung zwischen der Basis und dem Mobilteil und wird dauerhaft in einem Speicher gespeichert. Der Schlüssel wird also vorzugsweise erst einmal definiert und in einem dauerhaften Speicher, wie einem nicht-flüchtigen Speicher, abgespeichert.

Gemäß einem bevorzugten Ausführungsbeispiel der Erfindung wird der Schlüssel zu einem beliebigen Zeitpunkt während eines Verbindungsaufbaus zwischen der Basis und dem Mobilteil als aktueller Schlüssel bestimmt.

Gemäß einem anderen bevorzugten Ausführungsbeispiel der Erfindung wird während der zweiten Verbindung ein neuer Schlüssel vereinbart, mit dem die weitere Verbindung zwischen der Basis und dem Mobilteil neu verschlüsselt wird. Dies erhöht die Sicherheit bei kabelloser Datenübertragung noch ein weiteres Mal.

Gemäß einem anderen Aspekt der Erfindung wird die Aufgabe dadurch gelöst, dass ein Computerprogrammprodukt umfassend eine Code-Einrichtung bereitgestellt wird, die geeignet zum Ausführen der Schritte des erfindungsgemäßen Verfahrens ist, wenn es auf einem Computer ausgeführt wird.

Das erfindungsgemäße Verfahren dient zur sofortigen Verschlüsselung einer Verbindung zwischen einer Basis und einem Mobilteil. Mit anderen Worten wird das Trägermedium bei kabelloser Datenübertragung zwischen der Basis und dem Mobilteil verschlüsselt. Vorzugsweise wird das Verfahren in einer Prozedur umgesetzt und ist als Prozedur umsetzbar und standardisierbar. Dazu wird in der Prozedur in einer vorherigen Verbindung ein Schlüssel vereinbart und abgespeichert, danach wird bei einer direkten zweiten Verbindung direkt am Anfang mit einem verschlüsselten Burst, beispielsweise in der Luft, übertragen. Dieser neue Schlüssel wird bei zukünftigen Verbindungen benutzt. Der Schlüssel wird demnach beim Triggern der Basis und des Mobilteils gemeinsam genutzt.

Nachfolgend wird die Erfindung anhand bevorzugter Ausführungsbeispiele unter Bezugnahme auf die Zeichnungen weiter im Detail erläutert.
- Fig. 1: zeigt ein Ablaufdiagramm eines Verfahrens umfassend zwei Verbindungen gemäß einem ersten bevorzugten Ausführungsbeispiel der Erfindung;
- Fig. 2: zeigt eine Erweiterung der MAC Encryption Control Meldungen bei einem Verfahren gemäß einem zweiten bevorzugten Ausführungsbeispiel der Erfindung;
- Fig. 3: zeigt eine MAC-Verschlüsselungsprozedur mit Cipher Key Index bei einem Verfahren mit einer Verbindung gemäß einem dritten bevorzugten Ausführungsbeispiel der Erfindung; und
- Fig. 4: zeigt eine Software-basierte Implementierung gemäß einem vierten bevorzugten Ausführungsbeispiel der Erfindung.

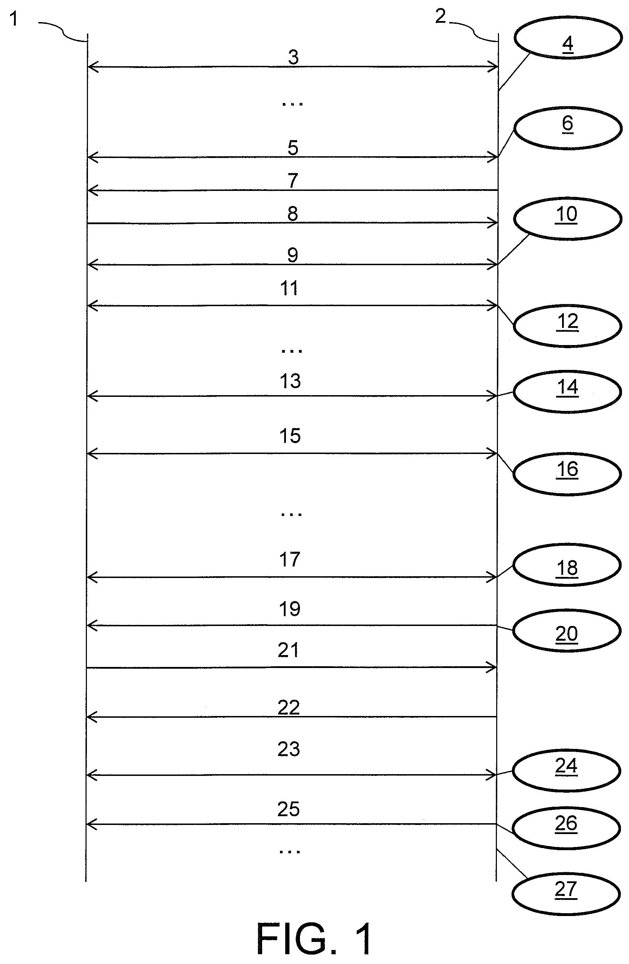

Fig. 1 zeigt ein Ablaufdiagramm eines Verfahrens umfassend zwei Verbindungen gemäß einem ersten bevorzugten Ausführungsbeispiel der Erfindung. Dabei ist aus Fig. 1 zu erkennen, dass eine erste Verbindung zwischen einem Mobilteil 1 und einer Basis 2 angestoßen wird, die erst mal unverschlüsselt abläuft (Bezugszeichen 4, 6, 10 und 12). Die Anmeldeprozedur 3 erfolgt zwischen dem Mobilteil 1 und der Basis 2. Hierbei wird weder ein Default Cipher Key noch ein Derived Cipher Key generiert (Bezugszeichen 4 in Fig. 1). Nach weiteren Schritten erfolgt schließlich ein MAC-Verbindungsaufbau 5, wobei es sich um einen unverschlüsselten Verbindungsaufbau 6 handelt. Anschließend erfolgen CC-Meldungen, wie CC-Setup 7 und CC-Alerting 8. Danach erfolgt eine Authentication of PT Prozedur 9, wobei ein Derived Cipher Key generiert wird 10. Dieses generierte Derived Cipher Key wird als aktueller Schlüssel verabredet 11 und als Default Cipher Key bezeichnet. Damit ist ab dem Ende der ersten Verbindung der Default Cipher Key verabredet 12.

Nach weiteren Schritten erfolgt schließlich bei einer zweiten Verbindung zwischen der Basis 2 und dem Mobilteil 1 ein MAC-Verbindungsaufbau 13. Die zweite Verbindung ist in Fig. 1 mit den Bezugszeichen 14, 16, 18, 20, 24, 26 und 27 gekennzeichnet. Der MAC initiiert unmittelbar die Verschlüsselung mit dem Default Cipher Key 14, der nach dem Ende der ersten Verbindung verabredet wurde 12. Anschließend erfolgt eine beliebige Mobility Management Prozedur 15, wie eine Location Registration, und die Übertragung erfolgt mit dem Default Cipher Key verschlüsselt 16. Somit findet eine sofortige Verschlüsselung der zu übertragenen Daten statt. Nach weiteren Schritten erfolgt schließlich ein weiterer MAC-Verbindungsaufbau 17, wobei der MAC unmittelbar die Verschlüsselung mit dem Default Cipher Key initiiert 18. Anschließend folgen weitere CC-Meldungen, wie CC-Setup 19, wobei die Übertragung mit dem Default Cipher Key verschlüsselt ist 20, CC-Alerting 21 und CC-Info mit CLIP 22. Danach wird eine "Authentication of PT"-Prozedur durchgeführt 23, wobei der Derived Cipher Key generiert wird 24. Abschließend erfolgt ein Cipher Suggest 25 von der Basis 2 zu dem Mobilteil 1, der die Verschlüsselung mit einem Derived Cipher Key anfordert 26. Damit wird die nächste Verbindung mit dem Derived Cipher Key verschlüsselt 27.

In Fig. 1 ist also der Ablauf eines Incoming Calls dargestellt, bei dem die CLIP-Information vor Initiierung der Verschlüsselung mit dem Derived Cipher Key übertragen wird. Typischerweise wird sich das Senden der CLIP-Information mit den Meldungen zur Generierung des Derived Cipher Key oft überschneiden. Analog ist der Fall des Outgoing Calls, bei dem anstelle der CLIP-Information die gewählten Ziffern abgehört werden können.

Es wird also ein Default Cipher Key definiert, der als solcher zwischen dem Mobilteil 1 und der Basis 2 vereinbart wird. Anschließend wird mit dem Default Cipher Key jede weitere Verbindung auf MAC Ebene sofort nach MAC Verbindungsaufbau verschlüsselt, solange die Gültigkeit der Anmeldedaten erhalten bleibt. Bei Aufbau einer MAC Verbindung ist daher ein Austausch von Netzwerk-Meldungen vor dem Initiieren der Verschlüsselung nicht mehr notwendig, d.h. weder CC-Meldungen noch Cipher initiierende Meldungen sind notwendig. Damit ist die Verbindung schon für die erste übertragene Netzwerk-Meldung, wie CC-Setup und auch für alle folgende Netzwerk-Meldungen, wie CC-bezogene Meldungen mit Wahlinformation, verschlüsselt.

Für die Bestimmung des Default Cipher Key gibt es verschiedene Möglichkeiten:
Die erste Möglichkeit besteht darin, dass der Default Cipher Key als der mit der ersten "Authentication of PT" nach einer Anmeldung generierte Derived Cipher Key definiert wird und nach Generierung dauerhaft in einem nicht-flüchtigen Speicher, wie einem EEPROM, kurz für Electrically Erasable Programmable Read-Only Memory, gespeichert wird. Als zweite Möglichkeit wird der Default Cipher Key zu einem beliebigen Zeitpunkt, auch mehrmals während der Gültigkeit einer Anmeldung, im Rahmen einer standardisierten oder proprietären Prozedur als der aktuell gültige Derived Cipher Key abgestimmt. Gemäß dem ersten bevorzugten Ausführungsbeispiel der Erfindung wird die zweite Variante verwendet, die eine flexible Möglichkeit bereitstellt.

Der Austausch des Default Cipher Key zwischen Basis 2 und Mobilteil 1 dient der Unterstützung der Verbindung. Der Austausch wird entweder mittels proprietären oder standardisierten Protokollelementen durchgeführt. Im Laufe einer Verbindung kann mit den üblichen bei DECT-Produkten bekannten Mechanismen ein Derived Cipher Key generiert werden. Sobald dieser neue Schlüssel feststeht, kann die Verschlüsselung auf diesen umgeschaltet werden und damit der Rest der Verbindung verschlüsselt werden. Der Default Cipher Key ist also für einen kurzen Zeitraum aktiv, beispielsweise zu Beginn einer CC-Verbindung und für Mobility Management Prozeduren oder für CISS-Übertragungen.

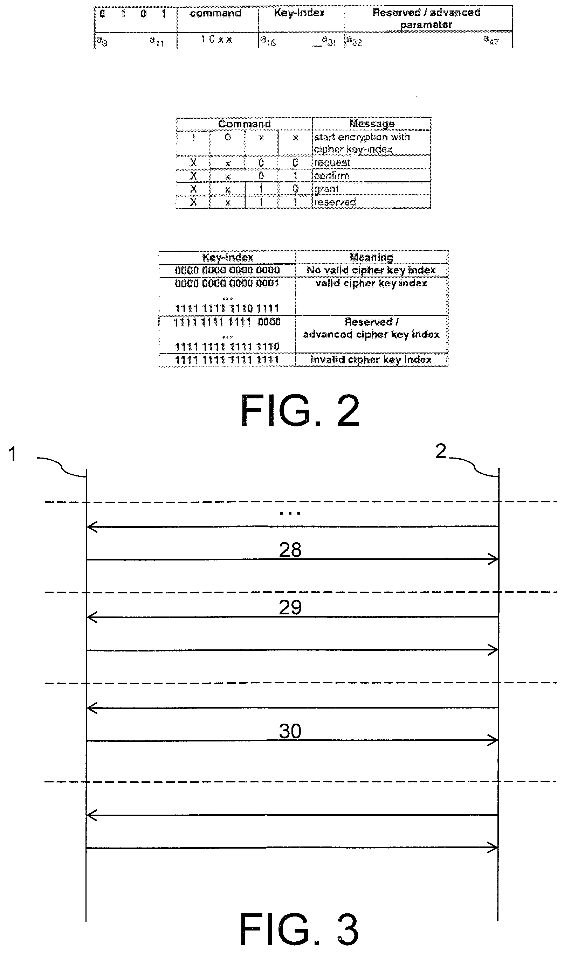

Fig. 2 zeigt die Erweiterung der MAC Encryption Control Meldungen bei einem Verfahren gemäß einem zweiten bevorzugten Ausführungsbeispiel der Erfindung. Fig. 2 enthält verschiedene Tabellen, wobei üblicherweise der Schlüssel in 64 bit-Darstellung abgespeichert wird. Der obere Teil in Fig. 2 gilt für einen Befehl in der Darstellung 10xx ("only for command = 10xx"). Der mittlere Teil in Fig. 2 zeigt die einzelnen Befehle und den Sinngehalt der Nachricht. Schließlich enthält der untere Teil in Fig. 2 die Darstellung des Indexes für den Schlüssel, auch als Cipher Key Index bezeichnet, und ihren entsprechenden Sinngehalt. Vorzugsweise wird also ein systemweit eindeutiger Cipher Key Index, kurz als CKID bezeichnet, definiert, der bei der Vereinbarung eines Default Cipher Key von der Basis 2 zugewiesen wird. Dieser CKID wird dann bei zukünftigen DECT Verbindungen beim Einschalten der Verschlüsselung mit Default Cipher Key direkt nach Verbindungsaufbau mit in der MAC-Encryption-Prozedur übertragen. Dadurch kann eine eindeutige Zuordnung des Default Cipher Keys in der Basis 2 erfolgen.

Fig. 3 zeigt die MAC-Verschlüsselungsprozedur mit Cipher Key Index gemäß einem dritten bevorzugten Ausführungsbeispiel der Erfindung. Dieser entspricht der MAC-Encryption-Prozedur EN 300 175-7 mit dem Unterschied, dass zusätzlich der CKID übertragen wird. Dieses Ausführungsbeispiel zeigt den Ablauf am Anfang der zweiten Verbindung (vgl. Fig. 1) des erfindungsgemäßen Verfahrens. Während dieser Verbindung zwischen dem Mobilteil 1 und der Basis 2 erfolgt eine Anfrage von dem Mobilteil 1 zur Basis 2 für den Verschlüsselungsstart mit dem neuen Index, der als Encryption-Start-Request (Cipher-Key-ID = 0xABCD) 28 bezeichnet wird. Direkt anschließend wird der Verschlüsselungsstart von der Basis 2 dem Mobilteil 1 durch eine Bestätigungsmeldung bestätigt, eine so genannte Encryption-Start-Confirm (Cipher-Key-ID = 0xABCD) 29 erfolgt. Nach einer gewissen Zeit wird vom Mobilteil 1 dieser neue Schlüssel mit dem neuen Index der Basis 2 gewährt, eine so genannte Encryption-Start-Grant (Cipher-Key-ID = 0xABCD) 30 wird gesendet. Dies entspricht, wie eingangs erwähnt, dem Ablauf der zweiten Verbindung zwischen der Basis 2 und dem Mobilteil 1.

Die Verschlüsselung wird somit unmittelbar nach dem MAC-Verbindungsaufbau, d.h. vor jeglicher Higher-Layer-Signalisierung, aktiviert. Dazu wird in einer ersten Kommunikation zwischen Basis und Mobilteil, d.h. einer früheren Kommunikation, ein Cipher Key für dieses sofortige Aktivieren der Verschlüsselung verabredet. Zur unmittelbaren Aktivierung der Verschlüsselung nach dem MAC-Verbindungsaufbau, wird eine MAC-Kommunikation verwendet, mit der in einer früheren Kommunikation verabredete Cipher Key identifiziert werden kann und für die neue Verschlüsselung verwendet wird.

Gemäß einem weiteren bevorzugten Ausführungsbeispiel der Erfindung wird auf der unmittelbar verschlüsselten Verbindung mit entsprechender Higher-Layer-Signalisierung ein neuer Cipher Key verabredet und die Verschlüsselung dann auf diesen neu gebildeten Cipher Key umgestellt. Damit wird die Sicherheit nochmals erhöht.

Durch die Einführung des Default Cipher Key und die oben beschriebene Verwendung in Kombination mit dem Derived Cipher Key wird eine direkte Verbesserung in Hinsicht auf die aktuell unter Sicherheitsgesichtspunkten diskutierten relevanten Szenarien erzielt. Neben dem direkten Vorteil der Verschlüsselung von Wahlinformationen wird der dynamische Wechsel zwischen den beiden Cipher Keys auf einer bereits verschlüsselten Verbindung das Hacken des Cipher Keys für potenzielle Hacker erschweren. Vorzugsweise wird die Kombination des Default Cipher Key mit dem Derived Cipher Key verwendet, aber auch eine alleinige Nutzung des Default Cipher Key ist möglich. Vorzugsweise wird der Schlüssel im Laufe der Zeit mehrfach verändert, so dass die Angriffsfläche zum Hacken noch kleiner wird.

Das erfindungsgemäße Verfahren kann auch in dem neuen DECT-Standard, dem so genannten CAT-iq-Standard, übernommen werden. Insbesondere bei Definitionen des Default Cipher Key als ersten nach der Anmeldung generierten Derived Cipher Key wird auch eine Anwendung zwischen Geräten verschiedener Hersteller realisierbar. Eine Definition als Pflicht-Feature in CAT-iq ist auch realisierbar.

Es ist erwähnenswert, dass der beschriebene Mechanismus des "Default Cipher Keys" kombinierbar mit den in DECT definierten Verschlüsselungsmechanismen ist. Abhängig von in DECT definierten Capability Bits kann bis zur Generierung des Derived Cipher Key entweder nicht oder eben mit dem Default Cipher Key verschlüsselt werden. Damit ist das erfindungsgemäße Verfahren auch abwärtskompatibel mit alten Herstellerprodukten.

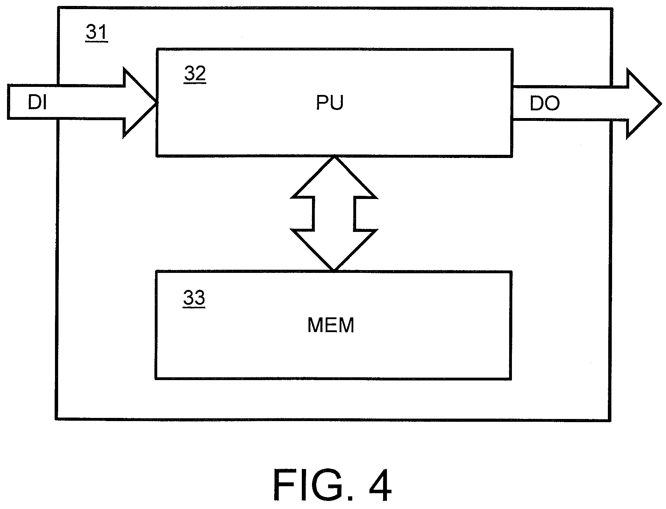

Fig. 4 zeigt ein schematisches Blockschaltbild einer Software-basierten Implementierung gemäß einem vierten bevorzugten Ausführungsbeispiel der Erfindung. Gemäß diesem vierten bevorzugten Ausführungsbeispiel der Erfindung umfasst die bereitgestellte Einheit 31 eine Verarbeitungseinheit 32, auch als Processing Unit (PU) bezeichnet, die auf einem einzelnen Chip oder auf einem Chipmodul bereitgestellt wird. Die Verarbeitungseinheit 32 umfasst jegliche Prozessoreinheit oder jegliche Computereinheit, die eine Steuereinheit umfasst, welche eine Steuerung mithilfe von Software-Routinen eines Steuerprogramms ausführt, wobei die Software-Routinen in einer Speichereinheit 33, auch als Memory (MEM) bezeichnet, gespeichert sind. Programmcodeanweisungen werden von der MEM 33 geholt und in die Steuereinheit der PU 32 geladen, um die einzelnen Verfahrensschritte des erfindungsgemäßen Verfahrens auszuführen. Die Verarbeitungsschritte der Blöcke 31 und 32 können auf der Basis von Eingangsdaten, auch als Data Input (DI) bezeichnet, ausgeführt werden und können Ausgangsdaten, auch als Data Output (DO) bezeichnet, erzeugen, wobei die Eingangsdaten DI Daten oder Signalen entsprechen, die kommuniziert und/oder erfasst wurden, und die Ausgangsdaten DO können Daten oder Signalen entsprechen, die mit anderen Einheiten kommuniziert werden oder kommuniziert werden sollen.

## Patentansprüche

1. Verfahren zur Verschlüsselung einer Verbindung zwischen einer Basis (2) und einem Mobilteil (1) umfassend die Schritte:
a) Generierung eines Schlüssels, der zwischen der Basis (2) und dem Mobilteil (1) während einer ersten Verbindung vereinbart wird, wobei der Schlüssel einen Index umfasst, der von der Basis (2) während der ersten Verbindung zugewiesen wird, und
b) Verwendung des generierten Schlüssels bei einer zweiten Verbindung zwischen der Basis (2) und dem Mobilteil (1), wobei die zu übertragenen Daten zwischen der Basis (2) und dem Mobilteil (1) anhand des dem Schlüssel zugewiesenen Indexes identifiziert und verschlüsselt werden, und während der zweiten Verbindung ein neuer Schlüssel vereinbart wird, mit dem die weitere Verbindung zwischen der Basis (2) und dem Mobilteil (1) neu verschlüsselt wird.

2. Verfahren nach Anspruch 1, wobei der Schlüssel einen Default Cipher Key und/oder einen Derived Cipher Key umfasst.

3. Verfahren nach einem der vorhergehenden Ansprüche, wobei die Generierung des Schlüssels nach einer ersten Anmeldung zwischen der Basis (2) und dem Mobilteil (1) erfolgt und dauerhaft in einem Speicher gespeichert wird.

4. Verfahren nach einem der vorhergehenden Ansprüche, wobei der Schlüssel zu einem beliebigen Zeitpunkt während eines Verbindungsaufbaus zwischen der Basis (2) und dem Mobilteil (1) als aktueller Schlüssel bestimmt wird.

5. Computerprogrammprodukt umfassend eine Code-Einrichtung, die geeignet zum Ausführen der Schritte eines Verfahrens nach einem der Ansprüche 1 bis 5 ist, wenn es auf einem Computer ausgeführt wird.

## Claims

1. Method for encrypting a connection between a base station (2) and a handset (1), comprising the steps of:
a) generating a key which is agreed upon between the base station (2) and the handset (1) during a first connection, wherein the key comprises an index which is assigned by the base station (2) during the first connection; and
b) using the generated key in a second connection between the base station (2) and the handset (1), wherein the data to be transmitted between the base station (2) and the handset (1) are identified and encrypted on the basis of the index assigned to the key, and wherein during the second connection a new key is agreed upon by means of which the further connection between the base station (2) and the handset (1) is re-encrypted.

2. Method according to claim 1, wherein the key comprises a Default Cipher Key and/or a Derived Cipher Key.

3. Method according to any one of the preceding claims, wherein the step of generating the key is carried out after a first registration between the base station (2) and the handset (1) and is permanently stored in a memory.

4. Method according to any one of the preceding claims, wherein the key is determined as the current key at an arbitrary time during a connection establishment between the base station (2) and the handset (1).

5. Computer program product comprising a code means adapted to perform the steps of a method according to any one of claims 1 to 4, when run on a computer.

## Revendications

1. Procédé de chiffrement d'une liaison entre une base (2) et une unité mobile (1) comprenant les étapes :
a) de génération d'une clé qui est convenue entre la base (2) et l'unité mobile (1) pendant une première liaison, où la clé comprend un indice qui est attribué par la base (2) pendant la première liaison, et
b) d'utilisation de la clé générée lors d'une deuxième liaison entre la base (2) et l'unité mobile (1), où les données transmises entre la base (2) et l'unité mobile (1) sont identifiées et chiffrées à l'aide de l'indice attribué à la clé, et, pendant la deuxième liaison, une nouvelle clé est convenue, avec laquelle une autre liaison entre la base (2) et l'unité mobile (1) est nouvellement chiffrée.

2. Procédé selon la revendication 1, où la clé comprend une clé de chiffrement par défaut Default Cipher Key et/ou une clé de chiffrement dérivée Derived Cipher Key.

3. Procédé selon l'une des revendications précédentes, où la génération de la clé a lieu après une première notification entre la base (2) et l'unité mobile (2) et est stockée durablement dans une mémoire.

4. Procédé selon l'une des revendications précédentes, où la clé est désignée comme étant la clé d'actualité à un moment arbitraire pendant l'établissement d'une liaison entre la base (2) et l'unité mobile (1).

5. Produit de programme informatique comprenant une structure de code qui est appropriée pour la réalisation des étapes d'un procédé selon l'une des revendications 1 à 5, lorsqu'il est exécuté par un ordinateur.
